# EUROPEAN PATENT SPECIFICATION

(11) **EP 3 112 606 B1**
(45) Date of publication and mention of the grant of the patent: **10.04.2019**
(21) Application number: 16177836.0
(22) Date of filing: 04.07.2016
(51) Int. Cl.: F01D 11/12, F01D 9/04, F01D 9/02, F01D 11/00, F02C 7/28

(54) **A SEAL FOR A GAS TURBINE ENGINE**
DICHTUNG FÜR EINEN GASTURBINENMOTOR
JOINT POUR MOTEUR DE TURBINE À GAZ

(30) Priority: 02.07.2015 US 201514790076
(43) Date of publication of application: 04.01.2017
(73) Proprietor: United Technologies Corporation, Farmington, CT 06032 (US)
(72) Inventor: LUTJEN, Paul M., Kennebunkport, ME 04046 (US); MOORE, Christopher, Ellington, CT 06029 (US); GRIFFIN, David, Tolland, CT 06084 (US)
(74) Representative: Dehns

(56) References cited:
- WO-A1-2015/089431
- US-A1- 2012 128 465
- US-A1- 2012 207 603

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Various components are attached to a static structure on the gas turbine engine, such as vanes, that must be prevented from rotating in a circumferential direction relative to the static structure. In order to prevent the circumferential rotation of the components, some form of engagement between the component and the static structure must be formed.

WO 2015/089431 A1 discloses a blade outer air seal (BOAS) for a gas turbine engine that includes a seal body having a radially inner face and a radially outer face that axially extend between a leading edge portion and a trailing edge portion. A retention flange extends from the leading edge portion and a leaf seal contacts the retention flange.

### SUMMARY

The present invention provides a gas turbine engine assembly as defined in claim 1.

In a further embodiment of the above, the shield forms a complete unitary circumferential hoop.

In a further embodiment of any of the above, the shield forms a circumferential hoop with a single discontinuity.

In a further embodiment of any of the above, a seal is in contact with the shield.

In a further embodiment of any of the above, the second portion of the shield is located radially outward from the seal. The first portion of the shield is located axially upstream from the seal.

In a further embodiment of any of the above, the seal includes a "W" shaped cross section pointing radially outward.

In a further embodiment of any of the above, the second portion of the shield is located radially outward from the seal and the first portion of the shield is located axially downstream from the seal.

The present invention further provides a gas turbine engine as defined in claim 7.

In a further embodiment of any of the above, the first portion that extends radially on an axially upstream end of the shield.

In a further embodiment of any of the above, the first portion that extends radially on an axially downstream end of the shield.

In a further embodiment of any of the above, the second portion of the shield is located radially outward from the seal. The first portion of the shield is located axially upstream from the seal.

In a further embodiment of any of the above, at least one vane includes at least one anti-rotation tab
In a further embodiment of any of the above, at least one blade outer air seal includes a feature for engaging at least one anti-rotation tab.

In a further embodiment of any of the above, an engine static structure has a plurality anti-rotation protrusions and at least one anti-rotation tab engages one of the plurality anti-rotation protrusions.

In a further embodiment of any of the above, at least one blade outer air seal includes a feature for engaging the at least one of anti-rotation tab.

In a further embodiment of any of the above, the seal directly contacts the shield and includes a "W" shaped cross section.

The present invention further provides a method of assembling a portion of a gas turbine engine as defined in claim 14.

In a further embodiment of any of the above, the shield is located axially between the vane and the blade outer air seal and the seal is located radially inward from the shield.

### BRIEF DESCRIPTION OF THE DRAWINGS

Figure 1 is a schematic view of an example gas turbine engine.
Figure 2 illustrates a schematic view of an example turbine section of the gas turbine engine.
Figure 3 illustrates an enlarged view of the turbine section.
Figure 4 illustrates a perspective view of a pair of vane doublets.
Figure 5 illustrates a cross-sectional view of an example shield.
Figure 6 illustrates a cross-sectional view of another example shield.

### DETAILED DESCRIPTION

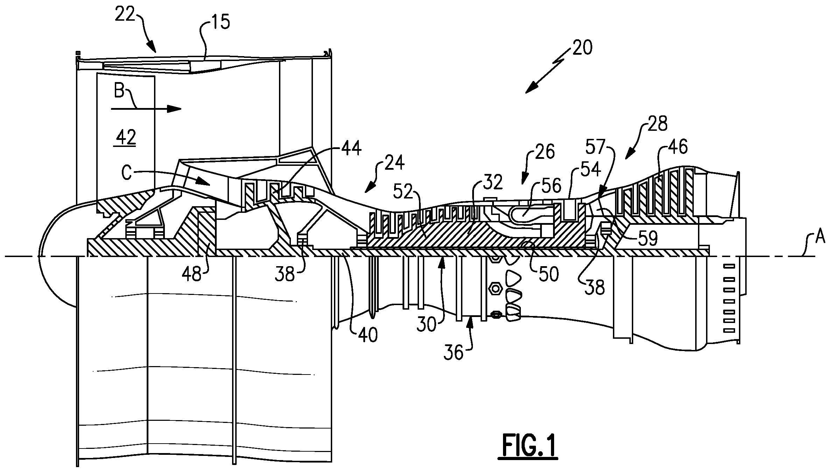

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

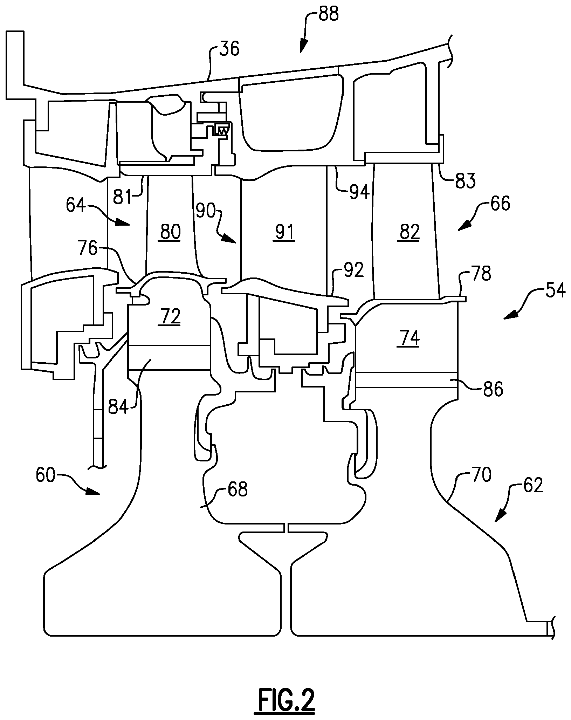

Figure 2 illustrates an enlarged schematic view of the high pressure turbine 54, however, other sections of the gas turbine engine 20 could benefit from this disclosure. The high pressure turbine 54 includes a two-stage turbine section with a first rotor assembly 60 and a second rotor assembly 62.

The first rotor assembly 60 includes a first array of rotor blades 64 circumferentially spaced around a first disk 68 and the second rotor assembly 62 includes a second array of rotor blades 66 circumferentially spaced around a second disk 70. Each of the first and second array of rotor blades 64, 66 include a respective first root portion 72 and a second root portion 74, a first platform 76 and a second platform 78, and a first airfoil 80 and a second airfoil 82. Each of the first and second root portions 72, 74 is received within a respective first rim and a second rim 84, 86 of the first and second disk 68, 70. The first airfoil 80 and the second airfoil 82 extend radially outward toward a first and second blade outer air seal (BOAS) assembly 81, 83, respectively.

The first and second array of rotor blades 64, 66 are disposed in the core flow path that is pressurized in the compressor section 24 then heated to a working temperature in the combustor section 26. The first and second platforms 76, 78 separate a gas path side inclusive of the first and second airfoils 80, 82 and a non-gas path side inclusive of the first and second root portions 72, 74.

A shroud assembly 88 within the engine case structure 36 between the first rotor assembly 60 and the second rotor assembly 62 directs the hot gas core airflow in the core flow path from the first array of rotor blades 64 to the second array of rotor blades 66. The shroud assembly 88 includes an array of vanes 90 that each include at least two airfoils 91 that extend between a respective inner vane platform 92 and an outer vane platform 94. The outer vane platform 94 of the vane 90 may at least partially engage the first and second BOAS 81, 83.

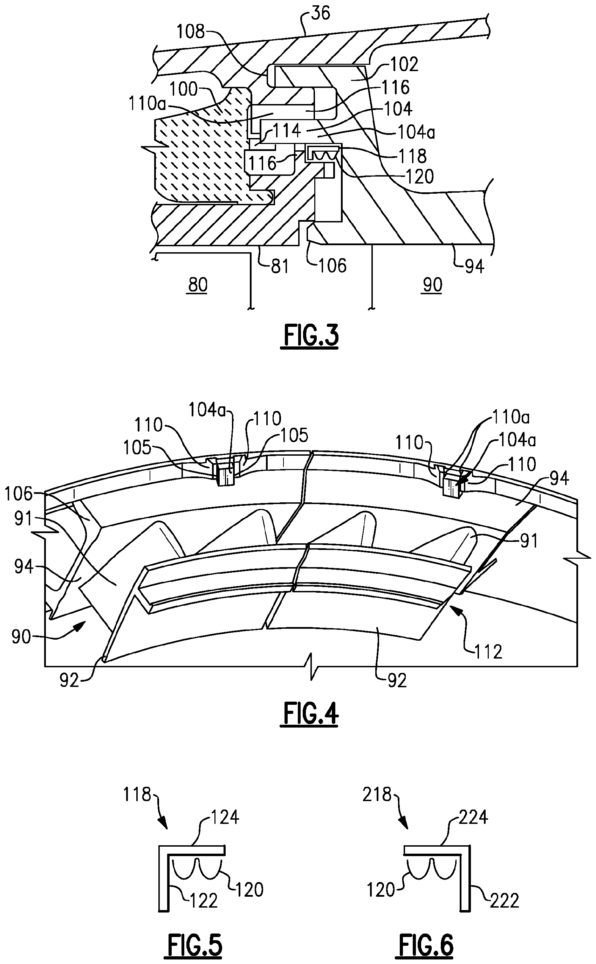

Figure 3 illustrates an enlarged view of the region surrounding a leading edge 106 of the outer vane platform 94 of the vane 90. In the illustrated example, the outer vane platform 94 of the vane 90 includes a vane hook 102, at least one anti-rotation tabs 104, and the leading edge 106 adjacent the gas path. The vane hook 102 engages a recess 108 formed in the engine static structure 36 to limit radial and axially forward movement of the vane 90 relative to the engine static structure 36.

The anti-rotation tabs 104 includes a primary anti-rotation tab 104a (Figure 4) on the vane 90. In the illustrated example, each vane 90 includes a pair of airfoils 91 extending between the outer vane platform 94 and inner vane platform 92, and a primary anti-rotation tab 104a. The primary anti-rotation tab 104a includes a pair of circumferential faces 105 (Figure 4) that engage corresponding circumferential faces 110a on anti-rotation protrusions 110 that extend radially inward from the engine static structure 36 to prevent the vane 90 from rotating circumferentially during operation. The circumferential faces 110a on the anti-rotation protrusions 110 extend along the axis A. As shown in Figure 3, the anti-rotation protrusions 110 engage a forward and radially outer portion of the anti-rotation tab 104. Although the anti-rotation protrusions 110 are shown in pairs, only one anti-rotation protrusion 110 could be used to engage the primary anti-rotation tab 104a.

The engine static structure 36 only includes one of the pairs of anti-rotation protrusions 110 per vane 90 as shown in Figure 4. The anti-rotation tabs 104 extends from a radially outer portion of the outer vane platform 94 and is located radially inward from the vane hook 102. The anti-rotation tabs 104 extend axially forward from the outer vane platform 94 and include a simple cross section, such as a square or rectangle, to simplify the manufacturing process.

A blade outer air seal support structure 100 and the blade outer air seal 81 also engage at least one of the anti-rotation tabs 104 to prevent circumferential movement of the blade outer air seal support structure 100 and the blade outer air seal 81. As shown in Figure 3, the blade outer air seal support structure 100 includes a feature 114, such as a pair of tabs (only one shown), that engages corresponding circumferential faces on the primary anti-rotation tab 104a to prevent rotation of the blade out air seal support structure 100. In the illustrated example, the features 114 engage a forward and radially inner portion of the primary anti-rotation tab 104a.

As shown in Figure 3, the BOAS 81 includes a feature 116, such as a pair of tabs (only one shown), that engages corresponding circumferential faces on the primary anti-rotation tab 104a to prevent rotation of the BOAS 81. In the illustrated example, the feature 116 engages a middle and a radially inner portion of the primary anti-rotation tab 104a.

A shield 118 is located adjacent a radially inner surface of the anti-rotation feature 104 and a downstream surface of the feature 116 on the BOAS 81. The shield 118 forms a circumferential hoop that surrounds the axis A of the gas turbine engine 20. In one example, the shield 118 forms a continuous hoop without any discontinuities and in another example the shield 118 includes a discontinuity forming a split in the hoop.

The shield 118 forms a continuous surface that to engage a seal 120 located between the vane 90 and the BOAS 81. In the illustrated example, the seal is a "W" shaped seal pointing radially outward. The seal reduces discrete contact points on the shield 118 where the shield 118 contacts the anti-rotation tab 104 and the feature 116.

Figure 5 illustrates a cross sectional view of the shield 118. The shield 118 includes a first portion 122 extending radially on an axially upstream end of the shield 118 and a second portion 124 extending axially from a radially outer end of the first portion 122. In one example, the shield 118 forms a complete unitary circumferential hoop that surrounds the axis A of the gas turbine engine 20. In another example, the shield 118 forms a circumferential hoop with a single discontinuity. In yet another example, the shield 118 forms a circumferential hoop with at least two discontinuities.

In the illustrated example, the second portion 122 of the shield 118 is located radially outward from the seal 120 and the first portion 122 of the shield 118 is located axially upstream from the seal 120.

Figure 6 illustrates a cross-sectional view of another example shield 218. The shield 218 is similar to the shield 118 except where described below or shown in the drawings. The shield 218 includes a first portion 222 extending radially on an axially downstream end of the shield 218 and a second portion 224 extending axially from a radially outer end of the first portion 222. In one example, the shield 218 forms a complete unitary circumferential hoop that surrounds the axis A of the gas turbine engine 20. In another example, the shield 218 forms a circumferential hoop with a single discontinuity. In yet another example, the shield 218 forms a circumferential hoop with at least two discontinuities.

In the illustrated example, the second portion 222 of the shield 218 is located radially outward from the seal 220 and the first portion 222 of the shield 218 is located axially downstream from the seal 120.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A gas turbine engine assembly comprising:
a shield (118) having a first portion (122) and a second portion (124), the first portion (122) extending radially from an axial end portion of the shield (118) including a blade outer air seal contact surface,
**characterized in that**:
the second portion (124) extends axially from a radially outer end of the first portion (122) and includes a contact surface with a vane.

2. The gas turbine engine assembly of claim 1, wherein the shield (118) forms a complete unitary circumferential hoop.

3. The gas turbine engine assembly of claim 1, wherein the shield (118) forms a circumferential hoop with a single discontinuity forming a split in the hoop.

4. The gas turbine engine assembly of any preceding claim, comprising a seal (120) in contact with the shield.

5. The gas turbine engine assembly of claim 4, wherein the second portion of the shield (118) is located radially outward from the seal (120) and the first portion of the shield is located axially upstream from the seal (120), or axially downstream from the seal (120).

6. The gas turbine engine assembly of claim 4 or 5, wherein the seal (120) includes a "W" shaped cross section pointing radially outward.

7. A gas turbine engine (20) comprising:
at least one vane (90);
at least one blade outer air seal (81) adjacent the at least one vane (90);
a gas turbine engine assembly of any preceding claim wherein the shield (118) is located axially between the at least one vane (90) and the at least one blade outer air seal (81); and
a seal (120) located radially inward from the shield (118).

8. The gas turbine engine of claim 7, wherein the first portion (122) extends radially on an axially upstream end of the shield (118).

9. The gas turbine engine of claim 7 wherein the first portion (122) extends radially on an axially downstream end of the shield (118).

10. The gas turbine engine of claim 8, wherein the second portion (124) of the shield (118) is located radially outward from the seal (120) and the first portion (122) of the shield is optionally located axially upstream from the seal (120).

11. The gas turbine engine of any of claims 7 to 10, wherein the at least one vane (90) includes at least one anti-rotation tab (104).

12. The gas turbine engine of claim 11, wherein:
the at least one blade outer air seal (81) includes a feature (116) for engaging the at least one anti-rotation tab (104); and/or
the gas turbine engine comprises an engine static structure with a plurality anti-rotation protrusions (110) and the at least one anti-rotation tab (104) engages one of the plurality anti-rotation protrusions (110); and/or
the at least one blade outer air seal includes a feature for engaging the at least one of anti-rotation tab (104).

13. The gas turbine engine of any of claims 7 to 12, wherein the seal (120) directly contacts the shield (118) and includes a "W" shaped cross section.

14. A method of assembling a portion of a gas turbine engine (20) comprising:
positioning a shield (118) in abutting contact with a blade outer air seal (81), the shield (118) comprising a first portion (122) and a second portion (124), the first portion (122) extending radially on an axially upstream end of the shield (118);
positioning a seal (120) in abutting contact with the shield (118) and the blade outer air seal (81); and
positioning a vane (90) in abutting contact with the shield (118),
**characterized in that**:
the second portion (124) extends axially from a radially outer end of the first portion (122) and includes a contact surface with a vane.

15. The method of claim 14, wherein the shield (118) is located axially between the vane (90) and the blade outer air seal (81) and the seal (120) is located radially inward from the shield (118).

## Patentansprüche

1. Gasturbinenmotorbaugruppe, umfassend:
eine Abschirmung (118), die einen ersten Abschnitt (122) und einen zweiten Abschnitt (124) aufweist, wobei sich der erste Abschnitt (122) radial von einem axialen Endabschnitt der Abschirmung (118) erstreckt, der eine Kontaktfläche einer äußeren Schaufelluftdichtung beinhaltet,
**dadurch gekennzeichnet, dass**:
sich der zweite Abschnitt (124) axial von einem radialen äußeren Ende des ersten Abschnitts (122) erstreckt und eine Kontaktfläche mit einer Schaufel beinhaltet.

2. Gasturbinenmotorbaugruppe nach Anspruch 1, wobei die Abschirmung (118) einen vollständigen einheitlichen Umfangsring bildet.

3. Gasturbinenmotorbaugruppe nach Anspruch 1, wobei die Abschirmung (118) einen Umfangsring mit einer einzigen Unterbrechung bildet, die einen Spalt in dem Ring bildet.

4. Gasturbinenmotorbaugruppe nach einem der vorangehenden Ansprüche, umfassend eine Dichtung (120) in Kontakt mit der Abschirmung.

5. Gasturbinenmotorbaugruppe nach Anspruch 4, wobei der zweite Abschnitt der Abschirmung (118) von der Dichtung (120) radial nach außen angeordnet ist und der erste Abschnitt der Abschirmung von der Dichtung (120) radial stromaufwärts oder von der Dichtung (120) axial stromabwärts angeordnet ist.

6. Gasturbinenmotorbaugruppe nach Anspruch 4 oder 5, wobei die Dichtung (120) einen "W-"förmigen Querschnitt beinhaltet, der radial nach außen gerichtet ist.

7. Gasturbinenmotor (20), umfassend:
zumindest eine Schaufel (90);
zumindest eine äußere Schaufelluftdichtung (81) benachbart zu der zumindest einen Schaufel (90);
eine Gasturbinenmotorbaugruppe nach einem der vorangehenden Ansprüche, wobei die Abschirmung (118) axial zwischen der zumindest einen Schaufel (90) und der zumindest einen Schaufelluftdichtung (81) angeordnet ist; und
eine Dichtung (120), die von der Dichtung (118) radial nach innen angeordnet ist.

8. Gasturbinenmotor nach Anspruch 7, wobei sich der erste Abschnitt (122) radial an einem axial stromaufwärtigen Ende der Abschirmung (118) erstreckt.

9. Gasturbinenmotor nach Anspruch 7, wobei sich der erste Abschnitt (122) radial an einem axial stromabwärtigen Ende der Abschirmung (118) erstreckt.

10. Gasturbinenmotor nach Anspruch 8, wobei der zweite Abschnitt (124) der Abschirmung (118) von der Dichtung (120) radial nach außen angeordnet ist und der erste Abschnitt (122) der Abschirmung gegebenenfalls von der Dichtung (120) radial stromabwärts angeordnet ist.

11. Gasturbinenmotor nach einem der Ansprüche 7-10, wobei die zumindest eine Schaufel (90) zumindest eine Antirotationslasche (104) beinhaltet.

12. Gasturbinenmotor nach Anspruch 11, wobei:
die zumindest eine äußere Schaufelluftdichtung (81) ein Merkmal (116) zum Eingreifen in die zumindest eine Antirotationslasche (104) beinhaltet; und/oder
der Gasturbinenmotor eine statische Motorstruktur mit einer Vielzahl von Antirotationsvorsprüngen (110) umfasst und die zumindest eine Antirotationslasche (104) in einen der Vielzahl von Antirotationsvorsprünge (110) eingreift; und/oder
die zumindest eine äußere Schaufelluftdichtung ein Merkmal zum Eingreifen in die zumindest eine Antirotationslasche (104) beinhaltet.

13. Gasturbinenmotor nach einem der Ansprüche 7 bis 12, wobei die Dichtung (120) die Abschirmung (118) direkt berührt und einen "W-"förmigen Querschnitt beinhaltet.

14. Verfahren zum Zusammenbauen eines Abschnitts eines Gasturbinenmotors (20), umfassend:
Positionieren einer Abschirmung (118) in Stoßkontakt mit einer äußeren Schaufelluftdichtung (81), wobei die Abschirmung (118) einen ersten Abschnitt (122) und einen zweiten Abschnitt (124) umfasst, wobei sich der erste Abschnitt (122) radial an einem axial stromaufwärtigen Ende der Abschirmung (118) erstreckt;
Positionieren einer Dichtung (120) in Stoßkontakt mit der Abschirmung (118) und der äußeren Schaufelluftdichtung (81); und
Positionieren einer Schaufel (90) in Stoßkontakt mit der Abschirmung (118),
**dadurch gekennzeichnet, dass**:
sich der zweite Abschnitt (124) axial von einem radialen äußeren Ende des ersten Abschnitts (122) erstreckt und eine Kontaktfläche mit einer Schaufel beinhaltet.

15. Verfahren nach Anspruch 14, wobei die Abschirmung (118) axial zwischen der Schaufel (90) und der äußeren Schaufelluftdichtung (81) angeordnet ist und die Dichtung (120) von der Abschirmung (118) radial nach innen angeordnet ist.

## Revendications

1. Ensemble de moteur de turbine à gaz, comprenant :
un bouclier (118) ayant une première partie (122) et une seconde partie (124), la première partie (122) s'étendant radialement à partir d'une partie d'extrémité axiale du bouclier (118) comportant une surface de contact de joint d'étanchéité vis-à-vis de l'air externe de pale,
**caractérisé en ce que** :
la seconde partie (124) s'étend axialement à partir d'une extrémité radialement externe de la première partie (122) et comporte une surface de contact avec une aube.

2. Ensemble de moteur à turbine à gaz selon la revendication 1, dans lequel le bouclier (118) forme un cercle circonférentiel unitaire complet.

3. Ensemble de moteur à turbine à gaz selon la revendication 1, dans lequel le bouclier (118) forme un cercle circonférentiel avec une seule discontinuité formant une scission dans le cercle.

4. Ensemble de moteur à turbine à gaz selon une quelconque revendication précédente, comprenant un joint d'étanchéité (120) en contact avec le bouclier.

5. Ensemble de moteur à turbine à gaz selon la revendication 4, dans lequel la seconde partie du bouclier (118) est située radialement vers l'extérieur du joint d'étanchéité (120) et la première partie du bouclier est située axialement en amont du joint d'étanchéité (120) ou axialement en aval du joint d'étanchéité (120) .

6. Ensemble de moteur à turbine à gaz selon la revendication 4 ou 5, dans lequel le joint d'étanchéité (120) inclut une section transversale en forme de « W » pointant radialement vers l'extérieur.

7. Moteur à turbine à gaz (20) comprenant :
au moins une aube (90) ;
au moins un joint d'étanchéité vis-à-vis de l'air externe de pale (81) adjacent à l'au moins une aube (90) ;
un ensemble de moteur à turbine à gaz selon une quelconque revendication précédente, dans lequel le bouclier (118) est situé axialement entre l'au moins une aube (90) et l'au moins un joint d'étanchéité vis-à-vis de l'air externe de pale (81) ; et
un joint d'étanchéité (120) situé radialement vers l'intérieur du bouclier (118).

8. Ensemble de moteur à turbine à gaz selon la revendication 7, dans lequel la première partie (122) s'étend radialement sur une extrémité axialement en amont du bouclier (118).

9. Ensemble de moteur à turbine à gaz selon la revendication 7, dans lequel la première partie (122) s'étend radialement sur une extrémité axialement en aval du bouclier (118).

10. Ensemble de moteur à turbine à gaz selon la revendication 8, dans lequel la seconde partie (124) du bouclier (118) est située radialement vers l'extérieur du joint d'étanchéité (120) et la première partie (122) du bouclier est éventuellement située axialement en amont du joint d'étanchéité (120).

11. Moteur à turbine à gaz selon l'une quelconque des revendications 7 à 10, dans lequel l'au moins une aube (90) inclut au moins une languette anti-rotation (104).

12. Moteur à turbine à gaz selon la revendication 11, dans lequel :
l'au moins un joint d'étanchéité vis-à-vis de l'air externe de pale (81) inclut une fonctionnalité (116) pour mettre en prise l'au moins une languette anti-rotation (104) ; et/ou
le moteur à turbine à gaz comprend une structure statique de moteur avec une pluralité de saillies anti-rotation (110) et l'au moins une languette anti-rotation (104) met en prise l'une de la pluralité de saillies anti-rotation (110) ; et/ou
l'au moins un joint vis-à-vis de l'air externe de pale inclut une fonctionnalité pour mettre en prise l'au moins une languette anti-rotation (104).

13. Moteur à turbine à gaz selon l'une quelconque des revendications 7 à 12, dans lequel le joint d'étanchéité (120) est directement en contact avec le bouclier (118) et inclut une section transversale en forme de « W ».

14. Procédé d'assemblage d'une partie d'un moteur à turbine à gaz (20) comprenant :
le positionnement d'un bouclier (118) en contact bout à bout avec un joint d'étanchéité vis-à-vis de l'air externe de pale (81), le bouclier (118) comprenant une première partie (122) et une seconde partie (124), la première partie (122) s'étendant radialement sur une extrémité axialement en amont du bouclier (118) ;
le positionnement d'un joint d'étanchéité (120) en contact bout à bout avec le bouclier (118) et le joint d'étanchéité vis-à-vis de l'air externe de pale (81) ; et
le positionnement d'une aube (90) en contact bout à bout avec le bouclier (118), **caractérisé en ce que** :
la seconde partie (124) s'étend axialement à partir d'une extrémité radialement externe de la première partie (122) et comporte une surface de contact avec une aube.

15. Procédé selon la revendication 14, dans lequel le bouclier (118) est situé axialement entre l'aube (90) et le joint d'étanchéité vis-à-vis de l'air externe de pale (81) et le joint d'étanchéité (120) est situé radialement vers l'intérieur du bouclier (118).
